# EUROPÄISCHE PATENTANMELDUNG

(11) **EP 4 438 259 A1**
(43) Veröffentlichungstag der Anmeldung: **02.10.2024**
(21) Anmeldenummer: 23164886.6
(22) Anmeldetag: 29.03.2023
(51) Int. Cl.: B29B 7/42, B29B 7/48, B29B 7/58, B29B 7/60, B29B 7/84, B29B 7/86, B29C 48/25, B29C 48/69, B29C 48/74, B29C 48/76

(54) **VORRICHTUNG UND VERFAHREN ZUM AUFBEREITEN VON KUNSTSTOFFMATERIAL**

(71) Anmelder: Coperion GmbH, 70469 Stuttgart (DE)
(72) Erfinder: Liber, Leonid, 71277 Rutesheim (DE); Schofer, Jochen, 70435 Stuttgart (DE); Dreher, Felix, 70374 Stuttgart (DE); Matta, Marina, 75050 Gemmingen (DE); Yaman, Aleyna, 88213 Ravensburg (DE)
(74) Vertreter: Ege Lee & Roider Patentanwälte

(57) **Zusammenfassung**

Vorrichtung (100) zum Aufbereiten von Kunststoffmaterial (102), umfassend: eine Schneckenmaschine (104) mit zumindest einer in einem Gehäuse (108) gelagerten Behandlungselement-Welle (132) zum Plastifizieren des zugeführten Kunststoffmaterials zu einer Kunststoffschmelze (106), wobei die Schneckenmaschine eine Plastifizierzone (146), eine Compoundierzone (150) und eine zwischen der Plastifizierzone und der Compoundierzone angeordnete Stauzone (148) mit zumindest einem die Kunststoffschmelze aufstauenden Stauelement (162) aufweist; mindestens einen die Stauzone überbrückenden Schmelzekanal (164), der die Plastifizierzone und die Compoundierzone miteinander verbindet; und mindestens eine Schmelzefiltereinrichtung (166) zum Filtrieren der Kunststoffschmelze, die in dem Schmelzekanal wirksam angeordnet ist. Desweiteren wird offenbart ein Verfahren zum Aufbereiten von Kunststoffmaterial, umfassend folgende Schritte: Zuführen des Kunststoffmaterials (102) in eine Schneckenmaschine (104); Plastifizieren des zugeführten Kunststoffmaterials mittels der Schneckenmaschine zu einer Kunststoffschmelze (106); Herausführen zumindest eines Teils der Kunststoffschmelze aus der Schneckenmaschine; Filtrieren der herausgeführten Kunststoffschmelze mittels einer Schmelzefiltereinrichtung (166); Zurückführen der filtrierten Kunststoffschmelze in die Schneckenmaschine; und Compoundieren der Kunststoffschmelze mittels der Schneckenmaschine.

## Beschreibung

Die Erfindung betrifft eine Vorrichtung zum Aufbereiten von Kunststoffmaterial, beispielsweise Kunststoff-Recyclingmaterial und/oder Kunststoffabfall. Außerdem betrifft die Erfindung ein Verfahren zum Aufbereiten von Kunststoffmaterial, wie Kunststoff-Recyclingmaterial und/oder Kunststoffabfall.

Kunststoff-Recyclingmaterial, wie beispielsweise Post-Consumer-Abfall, stellt eine wichtige Rohstoffquelle dar. Bei Kunststoff-Recyclingmaterial sind die Kunststoffe jedoch meist verunreinigt, beispielsweise mit Biomasse, Sand, Papier, Glas, Aluminium und dergleichen. Für eine wirtschaftlich sinnvolle Nutzung muss das Kunststoff-Recyclingmaterial sortiert, von den Verunreinigungen, beispielsweise durch Waschen, gereinigt und zerkleinert werden. Im Anschluss kann eine Weiterverarbeitung mit Hilfe von Extrusionsanlagen erfolgen. Das aufbereitete Kunststoffmaterial kann dann mit einer Granulieranlage in Granulat verarbeitet werden, das wertvolles und hochwertiges Ausgangsmaterial für neue Produkte darstellt.

Üblicherweise wird beim mechanischen Recycling das Kunststoff-Recyclingmaterial mittels einer ersten Extruderanlage aufgeschmolzen und die Kunststoffschmelze einer Filtrier- und Granulieranlage zugeführt. Eine zweite Extruderanlage wird dann mit dem Kunststoffgranulat beschickt, in der es wieder aufgeschmolzen, dann compoundiert und entgast und anschließend wieder regranuliert wird. Aus den gewonnenen Regranulaten können dann neue Produkte hergestellt werden. Durch das zweimalige Aufschmelzen sind solchen Anlagen äußert energieineffizient und kostenintensiv.

Es wäre jedoch wünschenswert, dass beim Kunststoffrecycling die Filtration und Compoundierung effizienter und wirtschaftlicher erfolgt, um Energie und Kosten einzusparen.

Der Erfindung liegt die Aufgabe zugrunde, eine eingangs genannte Vorrichtung zum Aufbereiten von Kunststoffmaterial strukturell und/oder funktionell zu verbessern. Außerdem liegt der Erfindung die Aufgabe zugrunde, ein eingangs genanntes Verfahren zum Aufbereiten von Kunststoffmaterial strukturell und/oder funktionell zu verbessern. Es ist daher eine Aufgabe der vorliegenden Erfindung, eine Aufbereitungsvorrichtung und ein Aufbereitungsverfahren bereitzustellen, welche die im Zusammenhang mit dem Stand der Technik aufgezeigten Probleme reduzieren bzw. beseitigen. Beispielweise ist es eine Aufgabe die Energieeffizienz zu steigern und Kosten für Betrieb, Logistik, etc. zu verringern.

Die Aufgabe wird gelöst mit einer Vorrichtung mit den Merkmalen des Anspruchs 1. Außerdem wird die Aufgabe gelöst mit einem Verfahren mit den Merkmalen des Anspruchs 10. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie weitergebildet und/oder kombiniert sein. Ebenso können nachfolgend beschriebene Vorrichtungs- und Verfahrensmerkmale miteinander kombiniert und/oder weitergebildet werden.

Ein Aspekt betrifft eine Vorrichtung zum Aufbereiten von Kunststoffmaterial. Die Vorrichtung kann eine Aufbereitungsanlage sein.

Das Kunststoffmaterial kann Kunststoff-Recyclingmaterial sein oder umfassen. Das Kunststoff-Recyclingmaterial kann Kunststoffabfall, z.B. Endverbraucher-Kunststoffabfall ("post consumer waste"), sein. Das Kunststoff-Recyclingmaterial liegt vorzugweise als Kunststoffpartikel vor, die gewaschen und/oder gereinigt sein können. Die Kunststoffpartikel können je nach Partikelgröße und/oder Partikelform beispielsweise als Kunststoffgranulat, Kunststoffflocken, Kunststofffasern oder Kunststoffpulver vorliegen. Die Kunststoffpartikel können Recyclat sein. Die Kunststoffpartikel können auch schnipselförmig und/oder flakeförmig sein. Das Kunststoff-Recyclingmaterial kann auch geschreddert oder gemahlen worden sein. Insbesondere bildet das Kunststoff-Recyclingmaterial bzw. die Kunststoffpartikel Schüttgut. Das Kunststoffmaterial kann, insbesondere thermoplastische, Polymere aufweisen.

Die Vorrichtung umfasst vorzugsweise eine Schneckenmaschine mit zumindest einer in einem Gehäuse gelagerten Behandlungselement-Welle zum Plastifizieren des zugeführten Kunststoffmaterials zu einer Kunststoffschmelze. Die zumindest eine Behandlungselement-Welle kann zum Plastifizieren und/oder Aufbereiten der Kunststoffschmelze ausgebildet sein. Das Gehäuse kann ein Zylindergehäuse sein, in dem die zumindest eine Behandlungselement-Welle aufgenommen ist.

Zum Zuführen des Kunststoffmaterials in die Schneckenmaschine kann die Schneckenmaschine eine Zuführöffnung aufweisen. Vorzugsweise kann die Zuführöffnung in einer Einzugszone der Schneckenmaschine vorgesehen sein. In einer Variante kann die Zuführöffnung eine Haupt-Zuführöffnung, z.B. Haupt-Einlauf, der Schneckenmaschine sein. Die Vorrichtung kann ferner eine Zuführvorrichtung und/oder Dosiereinrichtung zum Zuführen des Kunststoffmaterials umfassen. Das Zuführen des Kunststoffmaterials kann beispielsweise kontinuierlich und/oder dosiert erfolgen. Alternativ kann das Zuführen des Kunststoffmaterials diskontinuierlich erfolgen.

Die Schneckenmaschine kann eine Plastifizierzone, eine Compoundierzone und eine zwischen der Plastifizierzone und der Compoundierzone angeordnete Stauzone aufweisen. Vorzugsweise kann die Plastifizierzone der Stauzone unmittelbar bzw. direkt vorgeschalten und die Compoundierzone kann der Stauzone unmittelbar bzw. direkt nachgeschalten sein. Die Stauzone kann beispielsweise zumindest ein die Kunststoffschmelze aufstauendes Stauelement aufweisen. Das zumindest eine Stauelement kann in dem Gehäuse angeordnet sein. Beispielsweise kann das zumindest eine Stauelement durch die zumindest eine Behandlungselement-Welle ausgebildet und/oder an bzw. auf dieser angeordnet sein.

Die Vorrichtung kann ferner mindestens einen die Stauzone überbrückenden Schmelzekanal aufweisen, der die Plastifizierzone und die Compoundierzone miteinander verbindet. Die Vorrichtung kann somit ausgebildet sein, die Kunststoffschmelze von der Plastifizierzone durch den Schmelzekanal hindurch in die Compoundierzone zu leiten.

Gemäß einer bevorzugten Variante kann die Vorrichtung mindestens eine Schmelzefiltereinrichtung zum Filtrieren der Kunststoffschmelze aufweisen. Die zumindest eine Schmelzefiltereinrichtung kann in dem Schmelzekanal wirksam angeordnet sein. Beispielsweise kann ein Schmelzekanalabschnitt in die Schmelzefiltereinrichtung führen bzw. an einem Eingang der Schmelzefiltereinrichtung angeschlossen sein. Ferner kann ein weiterer Schmelzekanalabschnitt an einem Ausgang der Schmelzefiltereinrichtung angeschlossen sein. In dem Gehäuse der Schneckenmaschine kann unmittelbar vor der Stauzone eine Ausmündung in den zur Schmelzefiltereinrichtung führenden Schmelzekanal vorgesehen sein. Ferner kann in dem Gehäuse der Schneckenmaschine unmittelbar nach der Stauzone eine Einmündung des von der Schmelzefiltereinrichtung kommenden Schmelzekanals vorgesehen sein. Ein Schmelzekanalabschnitt kann daher mit seinem einen Ende mit der Ausmündung im Gehäuse und mit seinem anderen Ende mit dem Eingang der Schmelzefiltereinrichtung verbunden sein. Ein weiterer Schmelzekanalabschnitt kann mit seinem einen Ende mit dem Ausgang der Schmelzefiltereinrichtung und mit seinem anderen Ende mit der Einmündung im Gehäuse verbunden sein. Sowohl die Ausmündung als auch die Einmündung kann eine Öffnung im Gehäuse sein, aus der die Kunststoffschmelze aus der Schneckenmaschine herausgeführt bzw. wieder in die Schneckenmaschine wieder eingeführt werden kann.

Die zumindest eine Schmelzefiltereinrichtung kann zumindest einen Schmelzefilter aufweisen. Der zumindest eine Schmelzefilter kann kontinuierlich oder diskontinuierlich betreibbar sein. Der Schmelzefilter kann ein oder mehrere Filtereinheiten mit einem Filterelement aufweisen. Das Filterelement kann zum Beispiel ein Filtersieb und/oder Filterzylinder sein, der ausgebildet ist, die Kunststoffschmelze zu filtrieren. In einer Ausführungsvariante kann die zumindest eine Schmelzefiltereinrichtung eine Druckaufbaueinheit zum Aufbauen eines Schmelzedrucks aufweisen. Die Druckaufbaueinheit kann beispielsweise eine Schmelzepumpe und/oder Zahnradpumpe sein. Bevorzugt kann die Druckaufbaueinheit dem Schmelzefilter vorgeschalten sein, beispielsweise derart, dass die Druckaufbaueinheit die Kunststoffschmelze mit einem bestimmten Schmelzedruck durch den Schmelzefilter drücken kann.

In einer Ausführungsvariante kann die Compoundierzone einen Zuführabschnitt zum Zuführen zumindest eines Zusatzstoffs in die Schneckenmaschine aufweisen. Der Zuführabschnitt kann eine Zuführzone sein. Der Zusatzstoff kann ein Additiv, Hilfsstoff, Füllstoff, Talkum, Stabilisator, Modifier, Schlagzähmodifier, Antioxidant, Farbstoff oder Wasser sein oder umfassen. Beispielsweise kann der Zusatzsoff pulverförmig, granulatförmig, faserförmig oder flüssig sein. Der Zusatzsoff kann auch als Hohlkugeln vorliegen. Durch Zugabe zumindest eines Zusatzstoffes können die Kunststoffeigenschaften und/oder die Kunststoffstruktur gezielt verändert und/oder eingestellt werden. Zum Zuführen des Zusatzstoffes kann im Zuführabschnitt zumindest eine Zuführöffnung vorgesehen sein. In einer Variante kann die Vorrichtung zumindest eine Zuführeinrichtung und/oder Dosiereinrichtung zum Zuführen des zumindest einen Zusatzstoffs in die Kunststoffschmelze aufweisen. Das Zuführen des Zusatzstoffes kann kontinuierlich und/oder dosiert erfolgen. Alternativ kann das Zuführen des Zusatzstoffes diskontinuierlich erfolgen. Die Zuführeinrichtung kann beispielsweise eine Zuführschneckenmaschine sein oder umfassen, insbesondere eine, z.B. zweiwellige, Seitenbeschickungsschneckenmaschine. Ferner kann die Compoundierzone einen dem Zuführabschnitt in Förderrichtung nachgeordneten Mischabschnitt zum Aufschmelzen des Zusatzstoffs und/oder Einmischen des Zusatzstoffs in die Kunststoffschmelze aufweisen. Der Mischabschnitt kann eine Mischzone sein. In der Compoundierzone kann daher das Hinzufügen und/oder Einmischen des zumindest einen Zusatzstoffs nach dem Filtrieren der Kunststoffschmelze erfolgen. Vorteilhaft ist, dass das Filtrieren der Kunststoffschmelze und ein anschließendes Compoundieren mittels einer einzigen Schneckenmaschine erfolgen kann.

Zusätzlich kann in dem Gehäuse der Schneckenmaschine zumindest eine Entgasungsöffnung zum Entgasen vorgesehen sein. Die zumindest eine Entgasungsöffnung kann in der Einzugszone, der Plastifizierzone, der Stauzone, der Compoundierzone oder einer Austragszone der Schneckenmaschine angeordnet sein. Beispielsweise kann die zumindest eine Entgasungsöffnung mit einer Entgasungseinrichtung, z.B. Vakuum-Entgasungseinrichtung, verbundenen sein. Alternativ kann die zumindest eine Entgasungsöffnung zur Entgasung und/oder Entlüftung gegenüber Atmosphäre ausgebildet sein. Es können auch mehrere Entgasungsöffnung vorgesehen sein, beispielsweise in allen oder verschiedenen Zonen der Schneckenmaschine.

Die Schneckenmaschine kann eine Einwellenschneckenmaschine mit einer Behandlungselement-Welle, beispielsweise ein Einschneckenextruder, sein. In einer bevorzugen Ausführungsvariante kann die Schneckenmaschine eine Mehrwellenschneckenmaschine, beispielsweise eine Zweiwellen-Schneckenmaschine, sein. Dabei kann die Schneckenmaschine als gleichsinnig oder gegensinnig drehangetriebene und/oder dicht kämmende Mehrwellen-Schneckenmaschine ausgebildet sein. Beispielsweise kann die Schneckenmaschine zwei Behandlungselement-Wellen aufweisen, die in dem Gehäuse drehbar gelagert sind. Die Zweiwellen-Schneckenmaschine kann insbesondere ein Doppelschneckenextruder sein. Die zumindest eine Behandlungselement-Welle kann eine Extruderschnecke sein. Das Plastifizieren und/oder Aufbereiten kann mittels der Behandlungselement-Wellen der Schneckenmaschine erfolgen.

An einem in Förderrichtung letzten Gehäuseabschnitt des Gehäuses kann eine Austragsöffnung vorgesehen sein. Durch die Austragsöffnung kann die compoundierte bzw. aufbereitete Kunststoffschmelze ausbringbar sein. An der Austragsöffnung kann ein Extrusionswerkzeug, ein Strangkopfwerkzeug, eine Düsenvorrichtung oder eine Schneckenmaschine angeschlossen sein. Alternativ kann an der Austragsöffnung eine Filtereinrichtung und/oder eine Granuliereinrichtung oder eine andere Weiterverarbeitungsanlage angeschlossen sein.

Ein weiterer Aspekt betrifft ein Verfahren zum Aufbereiten von Kunststoffmaterial, insbesondere des vorstehend und/oder nachfolgend beschriebenen Kunststoffmaterials. Bei dem Kunststoffmaterial kann es sich daher beispielsweise um Kunststoff-Recyclingmaterial handeln. Das Verfahren kann ein Aufbereitungsverfahren sein. Das Verfahren kann ferner mit der vorstehend und/oder nachfolgend beschrieben Vorrichtung durchgeführt werden.

Bei dem Verfahren kann das Kunststoffmaterial zunächst in eine Schneckenmaschine zugeführt werden. Dabei kann dem Kunststoffmaterial zumindest ein Zusatzstoff hinzugefügt werden. Das Zuführen des Kunststoffmaterials kann beispielsweise mittels einer Zuführvorrichtung und/oder Dosiereinrichtung erfolgen. Dabei kann das Zuführen des Kunststoffmaterials kontinuierlich und/oder dosiert erfolgen. Alternativ kann das Zuführen des Kunststoffmaterials diskontinuierlich erfolgen. Beispielsweise kann das Zuführen des Kunststoffmaterials über eine Zuführöffnung der Schneckenmaschine erfolgen. In einer Variante kann die Zuführöffnung eine Haupt-Zuführöffnung, z.B. Haupt-Einlauf, der Schneckenmaschine sein.

Das zugeführte Kunststoffmaterial kann dann mittels der Schneckenmaschine zu einer Kunststoffschmelze plastifiziert werden. Unter Plastifizieren kann ein Aufschmelzen des Kunststoffmaterials verstanden werden. In einer Variante kann zumindest ein Zusatzstoff während des Plastifizierens in die Kunststoffschmelze eingemischt werden. Das Plastifizieren kann so erfolgen und/oder die Schneckenmaschine so gesteuert werden, dass eine bestimmte Schmelzetemperatur erreicht und/oder gehalten werden kann. Dabei kann das Plastifizieren mittels zumindest einer Behandlungselement-Welle der Schneckenmaschine erfolgen, beispielsweise in der Plastifizierzone der Schneckenmaschine. In einer bevorzugten Ausführungsvariante kann das Plastifizieren mittels zwei Behandlungselement-Wellen der Schneckenmaschine erfolgen.

Bei dem Verfahren kann zumindest ein Teil der Kunststoffschmelze aus der Schneckenmaschine herausgeführt werden. Beispielsweise kann die Kunststoffschmelze vollständig und/oder kontinuierlich aus der Schneckenmaschine herausgeführt werden. Die herausgeführte Kunststoffschmelze kann dann mittels einer Schmelzefiltereinrichtung filtriert werden. Anschließend kann die filtrierte Kunststoffschmelze wieder in die Schneckenmaschine zurückgeführt werden.

Die Kunststoffschmelze kann compoundiert und/oder aufbereitet werden. Bevorzugt kann die zurückgeführte und/oder filtrierte Kunststoffschmelze mittels der Schneckenmaschine compoundiert und/oder aufbereitet werden. Dabei kann der Kunststoffschmelze zumindest ein Zusatzstoff hinzugefügt werden. Hierzu kann der Zusatzstoff in die Schneckenmaschine zugeführt werden. Zumindest ein Zusatzstoff kann daher während des Compoundierens in die Kunststoffschmelze eingemischt werden, insbesondere um die Kunststoffeigenschaften und/oder Kunststoffstruktur gezielt zu verändern und/oder einzustellen. Das Zuführen des Zusatzstoffes kann kontinuierlich und/oder dosiert erfolgen. Alternativ kann das Zuführen des Zusatzstoffes diskontinuierlich erfolgen. Beispielsweise kann das Zuführen des Zusatzstoffes über eine Zuführöffnung der Schneckenmaschine erfolgen. In einer Variante kann das Zuführen des Zusatzstoffes mittels einer Zuführeinrichtung und/oder Dosiereinrichtung erfolgen.

Vorteilhaft ist insbesondere, dass das Hinzufügen und/oder Einmischen des zumindest einen Zusatzstoffs nach dem Filtrieren der Kunststoffschmelze erfolgen kann. Erfindungsgemäß kann daher das Filtrieren der Kunststoffschmelze und ein anschließendes Compoundieren mittels einer einzigen Schneckenmaschine erfolgen.

In einer weiteren Ausführungsvariante kann die Kunststoffschmelze homogenisiert und/oder entgast werden. Das Entgasen kann zum Beispiel über eine Entgasungsöffnung und/oder mit einer Entgasungseinrichtung erfolgen. Ferner kann das Entgasen in der Einzugszone, der Plastifizierzone, der Stauzone, der Compoundierzone und/oder der Austragszone der Schneckenmaschine erfolgen.

Sodann kann die aufbereitete bzw. compoundierte und/oder entgaste Kunststoffschmelze aus der Schneckenmaschine ausgetragen werden. Die aus der Schneckenmaschine ausgetragene, compoundierte Kunststoffschmelze kann dann mittels einer Filtereinrichtung filtriert und/oder mittels einer Granuliereinrichtung granuliert werden. Alternativ kann die aus der Schneckenmaschine ausgetragene, compoundierte Kunststoffschmelze einem Extrusionswerkzeug, einem Strangkopfwerkzeug, einer Düsenvorrichtung, einer Schneckenmaschine oder einer anderen Weiterverarbeitungsanlage zugeführt werden.

Zusammenfassend und mit anderen Worten dargestellt ergibt sich somit durch die Erfindung unter anderem eine Vorrichtung, wie Extrusionsanlage, die zur Filtration und Compoundierung von Kunststoffschmelzen nur eine Schneckenmaschine, wie Extruder, umfasst. Das Kunststoffmaterial kann in der Schneckenmaschine aufgeschmolzen, die verunreinigte Kunststoffschmelze für die Filtration aus der Schneckenmaschine herausgeleitet werden und danach wieder in die gleiche Schneckenmaschine für eine Compoundierung und/oder Entgasung zurückgeleitet werden. Die Vorrichtung und/oder die Schneckenmaschine kann auch als Filtrationscompounder bezeichnet werden, wobei das Aufschmelzen, Filtrieren und Füllen / Compoudieren der Kunststoffschmelze mittels eines einzigen Extruders erfolgen kann.

Mit der Erfindung kann die Energieeffizienz signifikant gesteigert werden, insbesondere dadurch, dass das Kunststoffmaterial nur einmal aufgeschmolzen werden muss. Auch können die Kosten für den Betrieb der Anlage und für die Logistik reduziert werden. Ein kleinerer Footprint durch weniger Extruder und Granuliertechnik kann ermöglicht werden. Ferner kann die Komplexität der Anlage reduziert werden.

Nachfolgend werden Ausführungsbeispiele der Erfindung unter Bezugnahme auf Figuren näher beschrieben, dabei zeigen schematisch und beispielhaft:

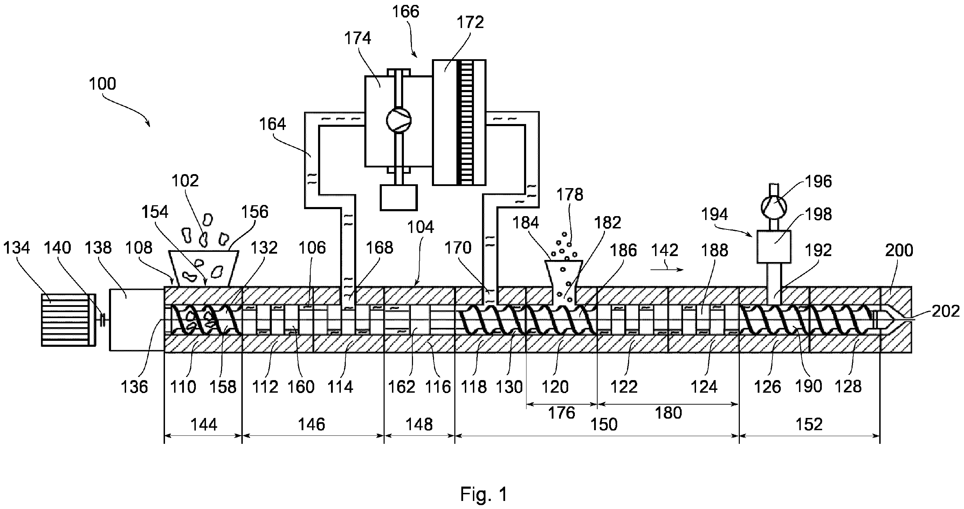

- Fig. 1: eine teilweise geschnittene Ansicht einer Vorrichtung zur Aufbereitung von Kunststoffmaterial.

Fig. 1 zeigt eine Aufbereitungsvorrichtung 100 zur Aufbereitung von Kunststoff-Recyclingmaterial 102. Die Aufbereitungsvorrichtung 100 umfasst eine Mehrwellenschneckenmaschine 104 und dient zum Plastifizieren des Kunststoff-Recyclingmaterials 102 zu einer Kunststoffschmelze 106, zum Filtrieren der aufgeschmolzenen Kunststoffschmelze 106 und dem anschließenden Aufbereiten bzw. Compoundieren der Kunststoffschmelze 106.

Die Mehrwellenschneckenmaschine 104 ist als gleichsinnig rotierende Zweiwellenschneckenmaschine ausgebildet. Die Mehrwellenschneckenmaschine 104 umfasst ein Gehäuse 108 aus mehreren nacheinander angeordneten Gehäuseabschnitten 110 bis 128, die zur Ausbildung des Gehäuses 108 miteinander verbunden sind. In dem Gehäuse 108 sind zwei zueinander parallele und einander durchdringende Gehäusebohrungen 130 ausgebildet, die im Querschnitt die Form einer liegenden Acht haben. Die Mehrwellenschneckenmaschine 104 umfasst ferner zwei in den Gehäusebohrungen 130 konzentrisch angeordnete Behandlungselement-Wellen 132, die von einem Antriebsmotor 134 um zugehörige Drehachsen 136 drehantreibbar sind. Zwischen den Behandlungselementwellen 132 und dem Antriebsmotor 134 sind ein Verzweigungsgetriebe 138 und eine Kupplung 140 angeordnet. Mittels des Antriebsmotors 134 werden die beiden Behandlungselement-Wellen 132 gleichsinnig, d.h. in gleichen Drehrichtungen, um die Drehachsen 136 drehangetrieben. Die Behandlungselement-Wellen 132 sind zum Plastifizieren des zugeführten Kunststoff-Recyclingmaterials 102 zu der Kunststoffschmelze 106 und zum Aufbereiten bzw. Compoundieren der Kunststoffschmelze 106 ausgebildet.

Wie in Fig. 1 dargestellt, weist die Mehrwellenschneckenmaschine 104 in einer Förderrichtung 142 nacheinander eine Einzugszone 144, eine Plastifizierzone 146, eine Stauzone 148, eine Compoundierzone 150 und eine Austragszone 152 auf.

In der Einzugszone 144 weist der Gehäuseabschnitt 110 eine Zuführöffnung 154 mit einem Haupt-Einlauftrichter 156 zum Zuführen des Kunststoff-Recyclingmaterials 102 in die Mehrwellenschneckenmaschine 104 auf. Die Behandlungselement-Wellen 132 umfassen in der Einzugszone 144 Schneckenelemente 158 zum Fördern des Kunststoff-Recyclingmaterials 102 in Förderrichtung 142.

In der Plastifizierzone 146 erfolgt ein Aufschmelzen des Kunststoff-Recyclingmaterials 102. Zum Aufschmelzen weisen die Behandlungselement-Wellen 132 in der Plastifizierzone 146 als Knetscheiben ausgebildete Knetelemente 160 auf. In der Plastifizierzone 146 wird das Kunststoff-Recyclingmaterials 102 zu der Kunststoffschmelze 106 aufgeschmolzen. Zusätzlich kann die Kunststoffschmelze 106 in der Plastifizierzone 146 homogenisiert werden.

Die Stauzone 148 ist zwischen der Plastifizierzone 146 und der Compoundierzone 150 angeordnet. In der Stauzone 148 erfolgt ein Aufstauen der Kunststoffschmelze 106. Hierzu weisen die Behandlungselement-Wellen 132 in der Stauzone 148 ein Stauelement 162 auf, beispielsweise eine Stauscheibe. Durch das Aufstauen wird die Kunststoffschmelze 106 im Wesentlichen entgegen der Förderrichtung 142 zurückgedrückt. Die Aufbereitungsvorrichtung 100 weist ferner einen die Stauzone 148 überbrückenden Schmelzekanal 164, der die Plastifizierzone 146 und die Compoundierzone 150 miteinander verbindet. In dem Schmelzekanal 164 ist eine Schmelzefiltereinrichtung 166 zum Filtrieren der Kunststoffschmelze 106 wirksam angeordnet. Die durch das Stauelement 162 zurückgedrückte Kunststoffschmelze 106 wird durch eine in dem Gehäuse 108 unmittelbar vor der Stauzone 148 vorhandene Ausmündung 168 in den zur Schmelzefiltereinrichtung 166 führenden Schmelzekanal 164 gedrückt.

Die Schmelzefiltereinrichtung 166 weist einen kontinuierlich oder diskontinuierlich betreibbaren Schmelzefilter 172 auf. Der Schmelzefilter 172 kann ein oder mehrere Filterelemente umfassen, die zum Filtrieren der Kunststoffschmelze 106 ausgebildet sind. Ferner weist die Schmelzefiltereinrichtung 166 eine als Schmelzepumpe ausgebildete Druckaufbaueinheit 174 zum Aufbauen eines Schmelzedrucks auf. Mittels der Druckaufbaueinheit 174 kann die Kunststoffschmelze 106 mit einem bestimmten Druck durch den Schmelzefilter 172 gedrückt werden.

Nachdem die Kunststoffschmelze 106 durch die Schmelzefiltereinrichtung 166 filtriert wurde, wird sie durch eine in dem Gehäuse 108 unmittelbar nach der Stauzone 148 vorhandene Einmündung 170 des von der Schmelzefiltereinrichtung 166 kommenden Schmelzekanals 164 wieder in die Mehrwellenschneckenmaschine 104 zurückgeführt, wobei die filtrierte Kunststoffschmelze 106 dann in die Compoundierzone 150 gelangt.

Die Compoundierzone 150 weist einen Zuführabschnitt bzw. eine Zuführzone 176 zum Zuführen zumindest eines Zusatzstoffs 178 in die Mehrwellenschneckenmaschine 104 und einen der Zuführzone 176 in Förderrichtung 142 nachgeordneten Mischabschnitt bzw. eine Mischzone 180 zum Aufschmelzen des Zusatzstoffs 178 und/oder Einmischen des Zusatzstoffs 178 in die Kunststoffschmelze 106 auf.

In der Zuführzone 176 der Compoundierzone 150 wird der zurückgeführten, filtrierten Kunststoffschmelze 106 der zumindest ein Zusatzstoff 178 zugeführt. Der Zusatzstoff 178 kann beispielsweise ein Additiv, Modifier, wie Schlagzähmodifier, Antioxidant, Farbstoff oder Wasser sein. Durch die Zugabe eines Zusatzstoffs 178 können die Kunststoffeigenschaften und/oder die Kunststoffstruktur gezielt eingestellt werden. In dem Gehäuseabschnitt 120 ist hierzu eine Zuführöffnung 182 ausgebildet, in die ein Zuführtrichter 184 mündet. Der Zusatzstoff 178 wird beispielsweise mit einer Dosiereinrichtung in den Zuführtrichter 184 und/oder über eine Zuführschneckenmaschine (in Fig. 1 nicht dargestellt) in die Mehrwellenschneckenmaschine 104 zugeführt. In der Zuführzone 176 weisen die Behandlungselement-Wellen 132 Schneckenelemente 186 auf, beispielsweise Förder-Schneckenelemente zum Fördern der Kunststoffschmelze 106 und des zumindest einen Zusatzstoffes 178 in Förderrichtung 142.

In der Mischzone 180 der Compoundierzone 150 wird der zumindest eine Zusatzstoff 178 aufgeschmolzen und/oder in die Kunststoffschmelze 106 eingemischt. Dabei kann die Mischung homogenisiert werden. Die Behandlungselement-Wellen 132 weisen in der Mischzone 180 als Knetscheiben ausgebildete Knetelemente 188 auf.

In der Austragszone 152 weisen die Behandlungselement-Wellen 132 Förder-Schneckenelemente 190 zum Austragen der aufbereiteten bzw. compoundierten Kunststoffschmelze 106 auf. Ferner ist in dem Gehäuseabschnitt 126 eine Entgasungsöffnung 192 zum Entgasen der Kunststoffschmelze 106 ausgebildet. Die Entgasungsöffnung 192 ist an eine Vakuum-Entgasungseinrichtung 194 angeschlossen, sodass die Kunststoffschmelze 106 über die Entgasungsöffnung 192 mittels der Vakuum-Entgasungseinrichtung 194 entgast wird. Die Vakuum-Entgasungseinrichtung 194 umfasst eine Vakuumpumpe 196, die über einen Abscheider 198 an die Entgasungsöffnung 192 angeschlossen ist. Alternativ kann die Entgasungsöffnung 192 zur Entgasung und/oder Entlüftung gegenüber Atmosphäre ausgebildet sein. An dem letzten Gehäuseabschnitt 128 ist eine das Gehäuse 108 abschließende Düsenplatte 200 angeordnet, die eine Austragsöffnung 202 ausbildet. Durch die Austragsöffnung 202 kann die filtrierte und compoundierte Kunststoffschmelze 106 ausgebracht werden. An der Austragsöffnung 202 kann eine Filtervorrichtung und/oder Granuliervorrichtung oder eine andere Weiterverarbeitungsanlage angeschlossen sein (in Fig. 1 nicht näher dargestellt).

Die Aufbereitungsvorrichtung 100 bzw. dessen Mehrwellenschneckenmaschine 104 ist insbesondere ausgebildet, die Kunststoffschmelze 106 zu filtrieren und anschließend im der gleichen Mehrwellenschneckenmaschine 104 zu compoundieren. Somit kann das Aufschmelzen, Filtrieren und Füllen / Compoundieren der Kunststoffschmelze 106 mittels eines einzigen Extruders erfolgen. Die Energieeffizienz wird dadurch signifikant verbessert und die Betriebskosten gesenkt.

Nachfolgend ist die Aufbereitung des Kunststoff-Recyclingmaterials 102 bzw. das Aufbereitungsverfahren mittels der Aufbereitungsvorrichtung 100 beschrieben.

Das zerkleinerte Kunststoff-Recyclingmaterial 102 wird, beispielsweise mittels einer Zuführvorrichtung und/oder über den Haupt-Einlauftrichter 156, in die Mehrwellenschneckenmaschine 104 zugeführt und gelangt dann in die Einzugszone 144. In der Einzugszone 144 wird das Kunststoff-Recyclingmaterial 102 in der Förderrichtung 142 zu der Plastifizierzone 146 gefördert. Sodann wird das zugeführte Kunststoff-Recyclingmaterial 102 in der Plastifizierzone 146 mittels der Behandlungselement-Wellen 132 bzw. deren Knetelemente 160 aufgeschmolzen.

Unmittelbar vor der Stauzone 148 wird zumindest ein Teil der Kunststoffschmelze 1 06 aus der Mehrwellenschneckenmaschine 104 herausgeführt und dann mittels der Schmelzefiltereinrichtung 166 filtriert. Die filtrierte Kunststoffschmelze 106 wird dann wieder in die Mehrwellenschneckenmaschine 104 zurückgeführt, wo sie in die Compoundierzone 150 gelangt.

In der Compoundierzone 150 wird die filtrierte Kunststoffschmelze 106 mittels der Mehrwellenschneckenmaschine 104 compoundiert. Dabei wird in der Zuführzone 176 über die Zuführöffnung 182 zumindest ein Zusatzstoff 178, wie zum Beispiel ein Additiv, Modifier, Antioxidant oder Wasser, der Kunststoffschmelze 106 zugeführt. In der Mischzone 180 wird der zumindest ein Zusatzstoff 178 aufgeschmolzen und in die Kunststoffschmelze 106 eingemischt. Die Mischung kann hier auch homogenisiert werden. Das Hinzufügen und/oder Einmischen des zumindest einen Zusatzstoffs 178 erfolgt somit nach dem Filtrieren der Kunststoffschmelze 1 06. Aus der Kunststoffschmelze 1 06 entweichende Gase werden in der Austragszone 152 mittels der Vakuum-Entgasungseinrichtung 194 abgeführt. Anschließend wird die filtrierte und compoundierte Kunststoffschmelze 106 aus der Mehrwellenschneckenmaschine 104 ausgetragen.

Die ausgebrachte Kunststoffschmelze 106 kann dann einer Filtereinrichtung und/oder einer Granuliereinrichtung zugeführt werden, die die Kunststoffschmelze 1 06 filtriert bzw. granuliert. Alternativ kann die ausgebrachte Kunststoffschmelze 106 einem Extrusionswerkzeug, einem Strangkopfwerkzeug, einer Düsenvorrichtung oder einer anderen Schneckenmaschine zugeführt werden.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden. Die Reihenfolge und/oder Anzahl der Schritte des Verfahrens kann variiert werden.

### Bezugszeichen

- 100: Aufbereitungsvorrichtung
- 102: Kunststoff-Recyclingmaterial
- 104: Mehrwellenschneckenmaschine
- 106: Kunststoffschmelze
- 108: Gehäuse
- 110-128: Gehäuseabschnitte
- 130: Gehäusebohrungen
- 132: Behandlungselement-Wellen
- 134: Antriebsmotor
- 136: Drehachsen
- 138: Verzweigungsgetriebe
- 140: Kupplung
- 142: Förderrichtung
- 144: Einzugszone
- 146: Plastifizierzone
- 148: Stauzone
- 150: Compoundierzone
- 152: Austragszone
- 154: Zuführöffnung
- 156: Haupt-Einlauftrichter
- 158: Förder-Schneckenelemente
- 160: Knetelemente
- 162: Stauelement
- 164: Schmelzekanal
- 166: Schmelzefiltereinrichtung
- 168: Ausmündung
- 170: Einmündung
- 172: Schmelzefilter
- 174: Druckaufbaueinheit
- 176: Zuführzone
- 178: Zusatzstoff
- 180: Mischzone
- 182: Zuführöffnung
- 184: Zuführtrichter
- 186: Förder-Schneckenelemente
- 188: Knetelemente
- 190: Förder-Schneckenelemente
- 192: Entgasungsöffnung
- 194: Vakuum-Entgasungseinrichtung
- 196: Vakuumpumpe
- 198: Abscheider
- 200: Düsenplatte
- 202: Austragsöffnung

## Patentansprüche

1. Vorrichtung (100) zum Aufbereiten von Kunststoffmaterial (102), umfassend:
- eine Schneckenmaschine (104) mit zumindest einer in einem Gehäuse (108) gelagerten Behandlungselement-Welle (1329 zum Plastifizieren des zugeführten Kunststoffmaterials (102) zu einer Kunststoffschmelze (106), wobei die Schneckenmaschine (104) eine Plastifizierzone (146), eine Compoundierzone (150) und eine zwischen der Plastifizierzone (146) und der Compoundierzone (150) angeordnete Stauzone (148) mit zumindest einem die Kunststoffschmelze (106) aufstauenden Stauelement (162) aufweist;
- mindestens einen die Stauzone (148) überbrückenden Schmelzekanal (164), der die Plastifizierzone (146) und die Compoundierzone (150) miteinander verbindet; und
- mindestens eine Schmelzefiltereinrichtung (166) zum Filtrieren der Kunststoffschmelze (106), die in dem Schmelzekanal (164) wirksam angeordnet ist.

2. Vorrichtung (100) nach Anspruch 1, **dadurch gekennzeichnet, dass** in dem Gehäuse (108) unmittelbar vor der Stauzone (148) eine Ausmündung (168) in den zur Schmelzefiltereinrichtung (166) führenden Schmelzekanal (164) vorgesehen ist und dass in dem Gehäuse (108) unmittelbar nach der Stauzone (148) eine Einmündung (170) des von der Schmelzefiltereinrichtung (166) kommenden Schmelzekanals (164) vorgesehen ist.

3. Vorrichtung (100) nach wenigstens einem der vorhergehenden Ansprüche, **dadurch gekennzeichnet, dass** die zumindest eine Schmelzefiltereinrichtung (166) einen kontinuierlich oder diskontinuierlich betreibbaren Schmelzefilter (172) aufweist.

4. Vorrichtung (100) nach wenigstens einem der vorhergehenden Ansprüche, **dadurch gekennzeichnet, dass** die zumindest eine Schmelzefiltereinrichtung (166) eine Druckaufbaueinheit (174) zum Aufbauen eines Schmelzedrucks, insbesondere eine Schmelzepumpe, aufweist.

5. Vorrichtung (100) nach wenigstens einem der vorhergehenden Ansprüche, **dadurch gekennzeichnet, dass** die Compoundierzone (150) einen Zuführabschnitt (176) zum Zuführen zumindest eines Zusatzstoffs (178) in die Schneckenmaschine (104) und einen dem Zuführabschnitt (176) in Förderrichtung (142) nachgeordneten Mischabschnitt (180) zum Aufschmelzen des Zusatzstoffs (178) und/oder Einmischen des Zusatzstoffs (178) in die Kunststoffschmelze (1 06) aufweist.

6. Vorrichtung (100) nach wenigstens einem der vorhergehenden Ansprüche, **dadurch gekennzeichnet, dass** in dem Gehäuse (108) zumindest eine Entgasungsöffnung (192) zum Entgasen vorgesehen ist, wobei die zumindest eine Entgasungsöffnung (192) in einer Einzugszone (144), der Plastifizierzone (146), der Stauzone (148), der Compoundierzone (150) oder einer Austragszone (152) der Schneckenmaschine (104) angeordnet ist.

7. Vorrichtung (100) nach Anspruch 6, **dadurch gekennzeichnet, dass** die zumindest eine Entgasungsöffnung (192) mit einer Entgasungseinrichtung (194), insbesondere Vakuum-Entgasungseinrichtung, verbundenen ist oder dass die zumindest eine Entgasungsöffnung (192) zur Entgasung und/oder Entlüftung gegenüber Atmosphäre ausgebildet ist.

8. Vorrichtung (100) nach wenigstens einem der vorhergehenden Ansprüche, **dadurch gekennzeichnet, dass** die Schneckenmaschine (104) eine Mehrwellenschneckenmaschine, insbesondere eine Zweiwellen-Schneckenmaschine, wie Doppelschneckenextruder, ist.

9. Vorrichtung (100) nach wenigstens einem der vorhergehenden Ansprüche, **dadurch gekennzeichnet, dass** an einem in Förderrichtung (142) letzten Gehäuseabschnitt (128) des Gehäuses (108) eine Austragsöffnung (202) vorgesehen ist, durch die die compoundierte Kunststoffschmelze (106) ausbringbar ist, wobei an der Austragsöffnung (202) ein Extrusionswerkzeug, ein Strangkopfwerkzeug, eine Düsenvorrichtung oder eine Schneckenmaschine angeschlossen ist, oder wobei an der Austragsöffnung (202) eine Filtereinrichtung und/oder eine Granuliereinrichtung angeschlossen ist.

10. Verfahren zum Aufbereiten von Kunststoffmaterial (102), umfassend folgende Schritte:
- Zuführen des Kunststoffmaterials (102) in eine Schneckenmaschine (104);
- Plastifizieren des zugeführten Kunststoffmaterials (102) mittels der Schneckenmaschine (104) zu einer Kunststoffschmelze (106);
- Herausführen zumindest eines Teils der Kunststoffschmelze (106) aus der Schneckenmaschine (104), Filtrieren der herausgeführten Kunststoffschmelze (106) mittels einer Schmelzefiltereinrichtung (166) und Zurückführen der filtrierten Kunststoffschmelze (106) in die Schneckenmaschine (104); und
- Compoundieren der Kunststoffschmelze (106) mittels der Schneckenmaschine (104).

11. Verfahren nach Anspruch 10, **dadurch gekennzeichnet, dass** dem Kunststoffmaterial (102) und/oder der Kunststoffschmelze (106) zumindest ein Zusatzstoff (178) hinzugefügt wird, und/oder dass zumindest ein Zusatzstoff (178) während des Plastifizierens und/oder während des Compoundierens in die Kunststoffschmelze (106) eingemischt wird.

12. Verfahren nach Anspruch 11, **dadurch gekennzeichnet, dass** das Hinzufügen und/oder Einmischen des zumindest einen Zusatzstoffs (178) nach dem Filtrieren der Kunststoffschmelze (106) erfolgt.

13. Verfahren nach wenigstens einem der vorhergehenden Ansprüche 10 bis 12, **dadurch gekennzeichnet, dass** die Kunststoffschmelze (106) homogenisiert und/oder entgast wird.

14. Verfahren nach wenigstens einem der vorhergehenden Ansprüche 10 bis 13, **dadurch gekennzeichnet, dass** die compoundierte Kunststoffschmelze (106) aus der Schneckenmaschine (104) ausgetragen und dann mittels einer Filtereinrichtung filtriert und/oder mittels einer Granuliereinrichtung granuliert wird.

15. Verfahren nach wenigstens einem der vorhergehenden Ansprüche 10 bis 13, **dadurch gekennzeichnet, dass** die compoundierte Kunststoffschmelze (106) aus der Schneckenmaschine (104) ausgetragen und dann einem Extrusionswerkzeug, einem Strangkopfwerkzeug, einer Düsenvorrichtung oder einer Schneckenmaschine zugeführt wird.
